# EUROPEAN PATENT SPECIFICATION

(11) **EP 2 791 998 B1**
(45) Date of publication and mention of the grant of the patent: **11.01.2017**
(21) Application number: 12738163.0
(22) Date of filing: 11.07.2012
(51) Int. Cl.: H01M 2/26, H01M 2/30, H01M 4/38, H01M 4/66, H01M 4/40

(54) **CONNECTING CONTACT LEADS TO LITHIUM-BASED ELECTRODES**
ANSCHLUSS VON KONTAKTDRÄHTEN AN LITHIUMBASIERTE ELEKTRODEN
RACCORDEMENT DE DÉRIVATIONS DE CONTACT À DES ÉLECTRODES À BASE DE LITHIUM

(30) Priority: 15.12.2011 EP 11193678; 02.05.2012 US 201261641612 P
(43) Date of publication of application: 22.10.2014
(73) Proprietor: Oxis Energy Limited, Abingdon Oxfordshire OX14 3DB (GB)
(72) Inventor: LILLEY, Scott Joseph, Dundee Aberdeenshire DD2 1EW (GB); IVANOV, Gleb, Oxford OX15JQ (GB); KOLOSNITSYN, Vladimir, Ufa 450052 (RU); SZCZERBA, Marek Jozef, Reading RG1 5PZ (GB)
(74) Representative: Chung, Hsu Min
(86) International application number: PCT/GB2012/051633
(87) International publication number: WO 2013/088115

(56) References cited:
- EP-A1- 0 924 783
- EP-A1- 2 026 402
- GB-A- 2 200 068
- JP-A- 2001 167 751
- JP-A- 2011 108 469
- US-A1- 2004 028 999
- US-A1- 2005 238 956
- US-A1- 2009 317 717
- US-A1- 2015 147 656
- US-B2- 7 335 440
- OKAMOTO H: "Cu-Li (Copper-Lithium)", JOURNAL OF PHASE EQUILIBRIA AND DIFFUSION, SPRINGER US, BOSTON, vol. 32, no. 2, 5 January 2011 (2011-01-05), page 172, XP019893460, ISSN: 1863-7345, DOI: 10.1007/S11669-010-9840-3

## Description

The present invention relates to the connection of a lithium or lithium alloy foil electrode or electrodes to a contact lead, so as to promote good electrical and mechanical contact therebetween.

### BACKGROUND

Primary and rechargeable batteries using metallic lithium as the active material for the negative electrode are known to have the highest energy per unit weight. In such batteries, the negative electrode, or anode, may be a lithium or lithium alloy foil component having a negative potential. The negative electrode may also include a current collector and a contact tab.

A current collector is an electrically conductive metallic foil, sheet or mesh that is generally used to provide a path for electrons from the external electrical circuit to the electrochemically active portion of the battery. A current collector will typically include a contact tab.

A contact tab is typically a metal foil portion of the current collector, which does not take part in the electrochemical process. It may extend from an edge of the main body of the current collector and is used to form the mechanical base for a weld to a contact lead.

A contact lead is a piece of electrically conductive metallic material used to form an electrical contact from the contact tab through a hermetically sealed battery container to the external electrical circuit. It is typically welded (in cells where metallic lithium is not used) or mechanically connected to the contact tab.

The contact lead must be connected or joined to the lithium in such a manner that a low resistance electrical connection is formed. Further, the connection or join must be mechanically strong enough to last for the expected life of the battery.

The current collectors in lithium primary batteries are typically composed of a metallic conductor other than lithium. The contact lead may be exposed to the electrolyte in an electrochemically active zone of the battery. This is not generally a problem in primary batteries; however it may cause problems in rechargeable (or secondary) batteries. In secondary batteries, lithium must be electrochemically deposited when the battery is recharged. In order to provide good reproducibility of performance, when the battery is repeatedly recharged, an excess of lithium is used so that lithium is only ever deposited onto lithium. If the contact lead or current collector is left exposed, then lithium will be plated onto a non-lithium substrate. This greatly increases the probability of unpredictable lithium deposition and hence poor cycling performance. This typically takes the form of active dendrite formation resulting in the quick degradation of the rechargeable lithium system. Examples of such failure mechanisms are described in US5368958, the full disclosure of which is incorporated into the present application by reference.

In a secondary battery with a lithium-based anode, the lithium is typically connected to the external circuit by one of two methods. Either a contact lead similar in design to that described for primary lithium batteries is used; as in US7335440, the full disclosure of which is incorporated into the present application by reference. US7335440 discloses the provision of a current collector in the form of a flat, solid piece of titanium, nickel, copper or an alloy of nickel or copper. The current collector is provided with a contact tab. A relatively long strip of alkali metal foil, having a width similar to the height of the current collector, is placed under the current collector and the two are pressed together. It is to be noted that, following assembly of the battery, the current collector (which is not made of an alkali metal) is immersed in electrolyte. Moreover, US7335440 states that this arrangement has problems in coiled, anode-limited cells of the type disclosed therein since there is a potential for a short circuit to be formed between the cathode material and the anode current collector when the thin layer of lithium has substantially depleted into the cathode in the outermost winding.

A variation of this method uses the metallic cell casing for the dual purpose of collecting current from the lithium, as in US7108942, the full disclosure of which is incorporated into the present application by reference. Additionally, the reverse face of the lithium electrode may be pressed or rolled against a thin metal current collector, as in US5368958, the full disclosure of which is incorporated into the present application by reference. The current collector can then be welded to a metal contact lead. However, if the current collector becomes exposed to the electrolyte, there is a risk that lithium will be plated onto the non-lithium current collector with the possible formation of dendrites that may short-circuit the battery. The metal current collector also adds unnecessary mass to the battery and reduces its specific energy.

In all of the examples described above, the metallic lithium is merely placed or pressed into contact with the current collector; there is no physical or chemical bond. This may be acceptable for primary batteries. However, for lithium metal rechargeable batteries such contact is not reliable. Indeed due to the reactive character of metallic lithium, corrosion layers may readily form on the interface of the mechanical connection between the lithium and the current collector. This may result in lower battery reliability as well as faster degradation in the capacity and cycle life of rechargeable lithium metal batteries.

### BRIEF SUMMARY OF THE DISCLOSURE

Viewed from one aspect, there is provided a method of connecting a stack of electrodes to a contact lead, wherein each electrode comprises a lithium or lithium alloy sheet formed with a tab providing a contact zone protruding from each sheet in substantially the same location, so that the tabs of the stack of electrodes are substantially aligned when the electrodes are aligned with each other and arranged as an electrode stack, and wherein the contact lead comprises an electrically conductive lead with an end portion, the method comprising the steps of:
i) positioning the end portion of the contact lead a) on top of the tabs of the electrode stack b) underneath the tabs of the electrode stack, or c) at an intermediate position between the top and the bottom of the electrode stack, and
ii) ultrasonically welding the contact zone to the end portion so as to join an electrode to the contact lead and to form a lithium to lithium or lithium alloy to lithium alloy weld between at least two tabs of the electrode stack.

Preferably, the entire sheet or foil is formed from lithium. Lithium metal and lithium alloys are employed as these tend to be useful as anode materials in secondary batteries, and are also soft and malleable, which allows a good connection to be made with the end portion of the contact lead when the welding step is performed.

The contact zone is provided on a tab that protrudes from the edge of the sheet or foil. In a preferred embodiment, the tab provides the only point of contact between the sheet or foil and the end portion of the contact lead. Accordingly, the sheet or foil of the electrode may include a region for contact with the electrolyte that is not in direct contact with the end portion of the contact lead. The ultrasonic weld is preferably provided in a region that is not in contact with any of the electrolyte in the electrochemical cell or battery.

Preferably, there is no current collector in direct contact with the region for contact with the electrolyte. In fact, the electrode may be devoid of a current collector altogether.

Preferably, the end portion is formed from for example, copper and/or nickel.

Without wishing to be bound by any theory, the ultrasonic welding step is believed to cause metal of the tab and/or the end portion to melt or soften, allowing the tab and end portion to be welded together under the applied pressure. The ultrasonic acoustic vibrations may also remove or disperse at least part of the alkali metal oxide layer formed on the tab, facilitating the formation of the bond. An advantage of the present invention is that melting or softening can be confined to the area of the join or weld, allowing a strong bond to be formed over a relatively small area. The area of the weld may be less than 50%, preferably less than 30%, more preferably less than 20%, yet more preferably, less than 10% (e.g. 1 - 5%) of the area of the sheet or foil.

Preferably, the ultrasonic welding step is carried out at frequencies of 15 to 70kHz, more preferably 20 to 60 kHz, even more preferably 20 to 40 kHz, for example, about 40 kHz. The ultrasonic welding step may be carried out at a maximum pressure of 0.4 MPa, preferably 0.1 to 0.4 MPa, for example, 0.2MPa.

The ultrasonic welding step may be carried out at a power of 100 to 5000 Watts. Amplitudes of 2 to 30 µηη may be used.

In one embodiment, the ultrasonic welding step is carried out using an apparatus comprising a first clamping portion and a second clamping portion. The first clamping portion and second clamping portion are movable relative to one another from a first spaced apart position to a second position in which the first and second clamping portions are closer to one another. Preferably, only the second clamping portion is movable; the position of the first clamping portion is fixed.

The first clamping portion acts as a support for the materials to be welded. The second clamping portion is configured to vibrate at an ultrasonic frequency. To perform the welding step, the end portion of the contact lead is placed in contact with the contact zone of the at least one electrode so that there is overlap between the end portion and the contact zone. The overlapping structure is then placed between the first and second clamping portions, preferably on top of the first clamping portion. Optionally, a positioning jig may be used to support the overlapping structure in position. The second clamping portion is then moved relative to the first clamping portion so as to apply a clamping pressure between the materials to be welded. The second clamping portion is then vibrated at ultrasonic frequency. This pre-shapes and rubs the electrode and end portion of the contact lead against one another to prepare the surfaces for the formation of a join. The amplitude of the ultrasonic vibrations plays an important part in pre-shaping and preparing the relevant parts for weld formation. The first clamping portion is typically held in a fixed position while the second clamping portion vibrates. The contact zone of the electrode and end portion of the contact zone are then welded together in the main welding phase.

The end portion of the contact lead may be substantially flat or planar, or may take other shapes or configurations depending, for example, on the shape or configuration of the welding equipment that is used.

As described above there is provided a plurality of electrodes, each comprising a sheet or foil with a tab (defining a contact zone) protruding from each sheet in substantially the same location, so that the tabs of the stack of electrodes are substantially aligned when the electrodes are aligned with each other and arranged as an electrode stack. For the avoidance of doubt, the tab defining the contact zone is formed of lithium or lithium alloy.

The end portion of the contact lead may be placed on top of the tabs of the electrode stack, underneath the tabs of the electrode stack, or at an intermediate position between the top and the bottom (i.e. with at least one tab above and at least one tab below). The tabs of the electrode stack may be pressed together before the end portion is placed on top of or underneath the compressed tabs and the ultrasonic welding is performed.

The welding step causes the tabs to bond together physically. The ultrasonic welding step causes the tabs (contact zones) of at least two sheets or foils formed from an alkali metal or an alloy of an alkali metal to be welded together. The ultrasonic welding step creates, for example, a lithium to lithium weld in addition to a weld between lithium and the end portion of the contact lead.

The end portion of the contact lead may be planar and devoid of through-holes. Alternatively, the end portion may optionally be perforated, punched or have a mesh-like or reticulated form. When such through-holes are present, it is important is that the metal of the tabs is sufficiently malleable to enable it to pass through the through holes so as to cause the end portion to become embedded in what is preferably a single phase of the first metal. This forms an intimate contact between the metals of the end portion of the contact lead and the contact zone of the electrode, and thus between the contact lead and the electrode.

Where the end portion has through-holes, the openness of the end portion may be defined as the ratio of open area to the full surface area of the end portion. The openness of the end portion of the contact lead may be in the range of 5% to 95%, preferably 20% to 90%, for example, 50% to 80%.

The electrically conductive lead of the contact lead may itself be generally planar, for example in the form of a ribbon, although other profiles may be useful. The electrically conductive lead may be made of the same metal as the end portion, or of a different metal.

In this way, it is possible for form a reliable connection with a contact lead made of a metal other than the metal of the electrode. It will be understood that the contact lead, which will generally be exposed outside the casing of the battery, must be made of a metal that has good electrical conductivity but is not highly reactive when exposed to air or moisture. Suitable metals include nickel, copper, stainless steel or various alloys.

Moreover, the metal of the contact lead, since it is connected only to the protruding tabs of the electrodes, is desirably not directly exposed to electrolyte when the battery is assembled.

A further advantage is that a good connection can be made to the at least one electrode without the electrode as a whole needing to be formed or disposed on a current collector made of a metal other than the metal used in the sheet or foil of the electrode. In other words, the main part of the electrode that is exposed to the electrolyte consists solely of the first metal (e.g. lithium or a lithium alloy), with no need for a copper or nickel or other current collector that would add unnecessary weight and act as a substrate for the formation of dendrites during cycling.

Moreover, it is important that the metal of the contact lead is selected so that it does not form an alloy with the metal of the electrode. This is in order to avoid reduction of the amount of the first metal that is available to the electrochemical system of the battery. For example, lithium will form an alloy with aluminium, but not with nickel or copper.

According to a further aspect of the invention, there is provided a lithium sulphur battery comprising a stack of electrodes to a contact lead, wherein each electrode comprises a lithium or lithium alloy sheet formed with a tab providing a contact zone protruding from each sheet in substantially the same location, so that the tabs of the stack of electrodes are substantially aligned, and wherein the contact lead comprises an electrically conductive lead with an end portion, whereby:
i) the end portion of the contact lead is positioned a) on top of the tabs of the electrode stack, b) underneath the tabs of the electrode stack, or c) at an intermediate position between the top and the bottom of the electrode stack, and
ii) an electrode is ultrasonically welded and joined directly to the contact lead, and at least two tabs of the electrode stack are ultrasonically welded and joined directly together by a lithium to lithium or lithium alloy to lithium alloy weld.

The device comprises at least two electrodes comprising a sheet or foil having a contact zone formed from an alkali metal or an alloy of an alkali metal, and wherein at least a portion of said contact zones are ultrasonically welded to one another. Thus, for example when the contact zone is formed from lithium or a lithium alloy, an ultrasonic weld between lithium/lithium alloy and lithium/lithium alloy is formed.

At least two electrodes are aligned with each other and arranged as an electrode stack. The end portion of the contact lead may be placed on top of or underneath the electrode stack, such that the end portion overlaps and is ultrasonically welded to the contact zone of the at least one electrode. Alternatively, the end portion of the contact lead may be placed at an intermediate position between the top and the bottom of the electrode stack. In the latter embodiment, the contact zones on either side of the end portion of may preferably also be ultrasonically welded to one another. Accordingly, an alkali metal/alkali metal alloy to alkali metal/alkali metal alloy ultrasonic weld may also be formed.

The end portion of the contact lead may be substantially flat or planar, or may take other shapes or configurations depending, for example, on the shape or configuration of any welding equipment that is used.

As detailed above, there may be provided a plurality of electrodes, each comprising a sheet or foil of metal with a tab protruding from each sheet in substantially the same location, so that the tabs of the stack of electrodes are substantially aligned when the electrodes are aligned with each other and arranged as an electrode stack.

In embodiments where the end portion of the contact lead is perforated, the end portion of the contact lead may be placed on top of the tabs of the electrode stack, underneath the tabs of the electrode stack, or at an intermediate position between the top and the bottom (i.e. with at least one tab above and at least one tab below). The tabs and the perforated end portion are then pressed together and the first metal (of the tabs) is caused to penetrate through the holes in the perforated planar end portion (made of the second metal) of the contact lead. Alternatively, the tabs of the electrode stack may be pressed together before the perforated end portion is placed on top of or underneath the compressed tabs and the penetration of step ii) is performed.

In embodiments where there is provided a stack of electrodes, the pressing and welding step causes the tabs to join together physically as well as to penetrate into the through holes of the contact lead. Preferably, the welding step is an ultrasonic welding step. This welding step preferably causes the tabs of at least two sheets or foils (preferably formed from an alkali metal or an alloy of an alkali metal) to be welded together. In a preferred embodiment, the ultrasonic welding step creates, for example, a lithium to lithium weld between at least two lithium tabs in addition to a weld between at least one lithium tab and the end portion of the contact lead.

Particularly preferred metals for the first metal are lithium and lithium alloys, since these tend to be useful as anode materials in secondary batteries, and are also soft and malleable, which allows a good connection to be made with the perforated end portion of the contact lead when the pressing and welding step is performed.

The end portion of the contact lead may be perforated, punched or have a meshlike or reticulated form. What is important is that when the first metal of the tabs is sufficiently malleable that it can pass through the through holes so as to cause the second metal of the end portion to become embedded in what is preferably a single phase of the first metal. This forms an intimate contact between the first and second metals, and thus between the contact lead and the electrodes.

The greater the openness or surface area of the end portion of the contact lead, the better the electrical (and physical) connection between the contact lead and the electrodes. The openness of the end portion may be defined as the ratio of open area to the full surface area of the end portion. The openness of the end portion of the contact lead may be in the range of 5% to 95%.

The electrically conductive lead of the contact lead may itself be generally planar, for example in the form of a ribbon, although other profiles may be useful. The electrically conductive lead may be made of the same metal as the second metal forming the end portion, or of a different metal.

In this way, it is possible for form a reliable connection with a contact lead made of a metal other than the metal of the electrode. It will be understood that the contact lead, which will generally be exposed outside the casing of the battery, must be made of a metal that has good electrical conductivity but is not highly reactive when exposed to air or moisture. Suitable metals include nickel, copper, stainless steel or various alloys.

Moreover, the metal of the contact lead, since it is connected only to the protruding tabs of the electrodes, is not directly exposed to electrolyte when the battery is assembled.

A further advantage is that a good connection can be made to the at least one electrode without the electrode as a whole needing to be formed or disposed on a current collector made of a metal other than the first metal. In other words, the main part of the electrode that is exposed to the electrolyte consists solely of the first metal (e.g. lithium or a lithium alloy), with no need for a copper or nickel or other current collector that would add unnecessary weight and act as a substrate for the formation of dendrites during cycling.

Moreover, it is important that the second metal (of the contact lead) is selected so that it does not form an alloy with the first metal (of the electrode). This is in order to avoid reduction of the amount of the first metal that is available to the electrochemical system of the battery. For example, lithium will form an alloy with aluminium, but not with nickel or copper.

In certain embodiments, the electrode is configured as an anode, or negative electrode, for a battery. However, it will be appreciated that the method is applicable also to cathodes, or positive electrodes, where these are made of a metal that is suitable for pressing and welding to a perforated second metal as described.

Embodiments of the present invention seek to provide a negative electrode (anode) eliminating the need for the current collector, and a method of forming a reliable physical contact between different pieces of metallic lithium and the contact lead, thereby to promote good electrical contact between metallic lithium and the material of the contact lead.

In preferred embodiments, an excess of metallic lithium is used such that at the end of the battery life there is a substantial amount of lithium metal which serves as the current collector for the negative electrode. The use of lithium as the current collector eliminates mechanical contact between metal lithium and another current collector material.

In some embodiments, there may be provided a plurality of electrodes, each comprising a sheet or foil of the first metal with a tab protruding from each sheet in substantially the same location, so that the tabs of the stack of electrodes are substantially aligned when the electrodes are aligned with each other and arranged as an electrode stack.

The lithium metal of the negative electrode in the region of the tabs may form a single phase connection from lithium electrode to lithium electrode in the electrode stack. Such connection is achieved by using pressing and welding as hereinbefore described.

The contact lead, or at least the end portion thereof, may be thin (for example, with a thickness of 5 to δθµηη), or may be thick (for example, with a thickness of 50 to I O,OOOµη 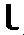 ).

The contact lead may be substantially linear, or may have a T-shaped or 'L'- shaped configuration.

The sheet or foil of the electrode may have a thickness of 30 to 150 µηη, for example, 50 to 100 µηη prior to the welding or joining step.

The end portion of the contact lead may be an integral part of the contact lead (in other words, formed from the same material as the rest of the contact lead and integral therewith), or may be a separate metal component, not necessarily of the same material as the rest of the contact lead, and welded thereto (for example by ultrasonic welding, thermal contact welding, laser welding, induction welding or other types of welding).

The electrodes described above may be used in a battery or electrochemical cell, preferably a lithium cell, such as a lithium-sulphur cell. The electrodes may be used as the anode of such cells. In one embodiment, the cell comprises i) electrodes as described above as the anodes, and ii) cathodes, such as a cathodes comprising sulphur as an active material. The anodes and cathodes may be placed in contact with a liquid electrolyte comprising a lithium salt dissolved in an aprotic organic solvent. A separator may be positioned between the anode and cathode. The electrolyte may be sealed within a container to prevent it from escaping. Preferably, the seal also prevents the alkali metal of the sheet or foil from being exposed to the surrounding environment. Thus, the weld between the contact zone or tab and the end portion of the contact leas is preferably located within the container, while at least a portion of the conductive lead accessible from outside of the sealed container.

### BRIEF DESCRIPTION OF THE DRAWINGS

Embodiments of the invention are further described hereinafter with reference to the accompanying drawings, in which:
FIGURES 1a to 1c shows a battery stack with anodes, cathodes and tabs, and three alternative positionings for a contact lead;
FIGURES 2a to 2e show possible designs for the contact lead;
FIGURE 3 shows the contact lead being ultrasonically welded to the tabs; and
FIGURES 4a to 4d show an apparatus suitable for use in forming an ultrasonic weld in use.

### DETAILED DESCRIPTION

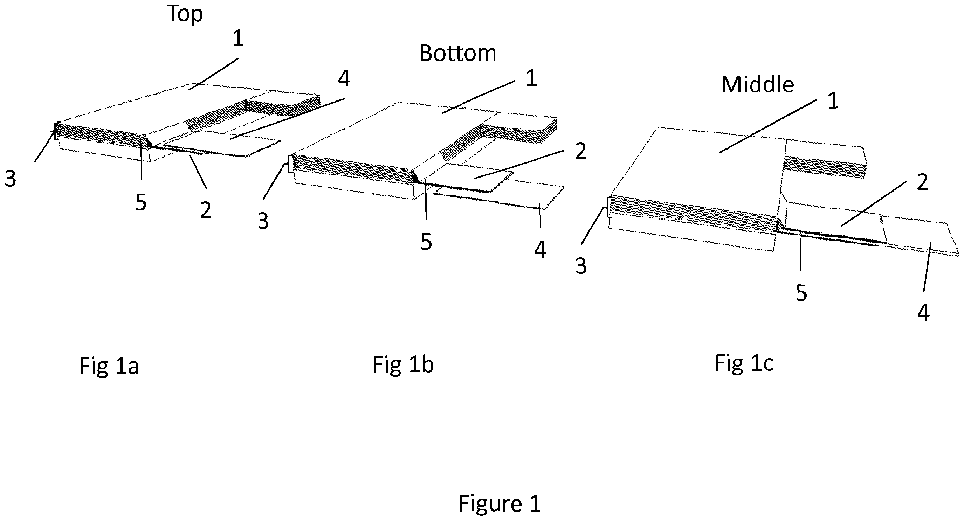

A battery can be formed by an alternating stack of numerous cathodes and anodes. Each of these layers is divided by a separator. An ionic pathway is maintained by the presence, between each electrode, of an electrolyte. Each electrode 1 features a tab 2 protruding from its electrochemically active area and beyond the edge of the separator. These tabs 2 provide the first surface through which the stack 3 of lithium anodes will be welded to each other and joined to a contact lead 4. The tabs 2 are first folded and/or formed by pressing. A contact lead 4 is then positioned at the top **(****Figure 1a**) or bottom **(****Figure 1 b)** of the stack 5 of tabs 2, or it may be positioned between any two lithium tabs 2 **(****Figure 1c****).**

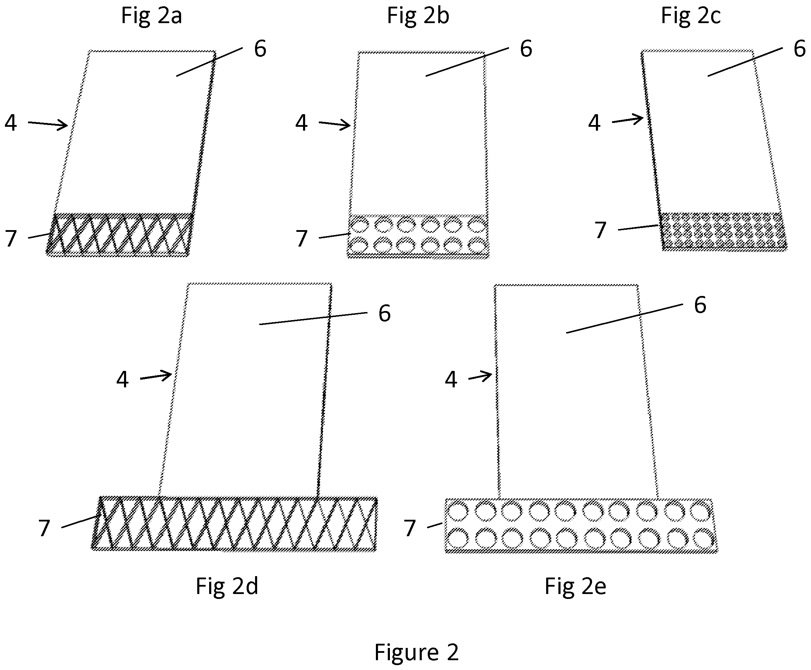

The contact leads 4 may take a number of forms **(****Figures 2a to 2e****).** The body 6 is composed of a conductive metal ribbon, typically nickel, copper, stainless steel or some composite conductor. The end portion 7 (the area to be welded) may be perforated, meshed or punched. Alternatively, the end portion 7 may be devoid of any through-holes (not shown). The end portion 7 may be an integral part of the metal ribbon 6, or it may be a separate piece welded to the ribbon 6. Where the end portion 7 is a separate piece welded to the ribbon 6, it may be made of a different metal to that of the ribbon 6. The contact may be linear, "T" or "L" shaped. The perforations, when present, may be rhombic, circular, square, rounded, polygonal or any other suitable shape.

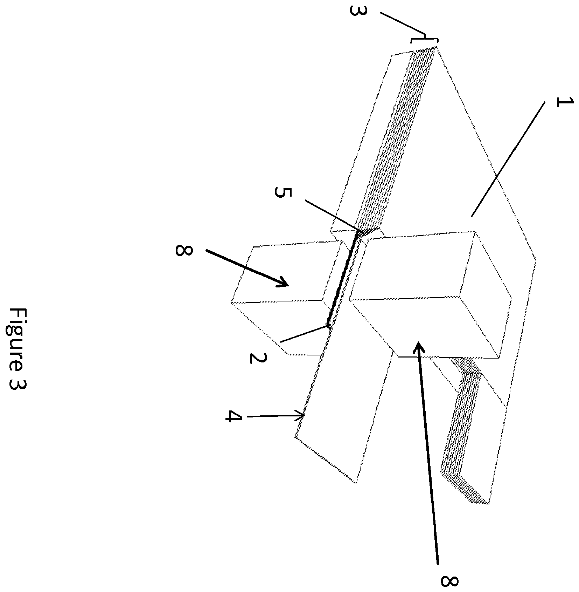

The tabs 2 and the contact lead 4 are then positioned between the two weld fixtures 8 of an ultrasonic welder **(****Figure 3****).** The ultrasonic welder then simultaneously applies pressure and an ultrasonic wave to the weld area. This causes the numerous lithium layers 2 to fuse together to form a lithium-lithium weld. Further, where the contact lead 4 includes through holes, the softened lithium percolates through the perforated or meshed area 7 of the contact lead 4. The contact lead 4 is hence joined to the lithium 2 as the mesh 7 is intimately surrounded by lithium. The high surface area contact between the mesh 7 of the contact lead 4 and the lithium electrode 1 produces a low resistance and a mechanically strong electrical contact. When the ultrasonic wave ceases and the pressure is released, the contact lead 4 will be joined to the lithium anodes 1.

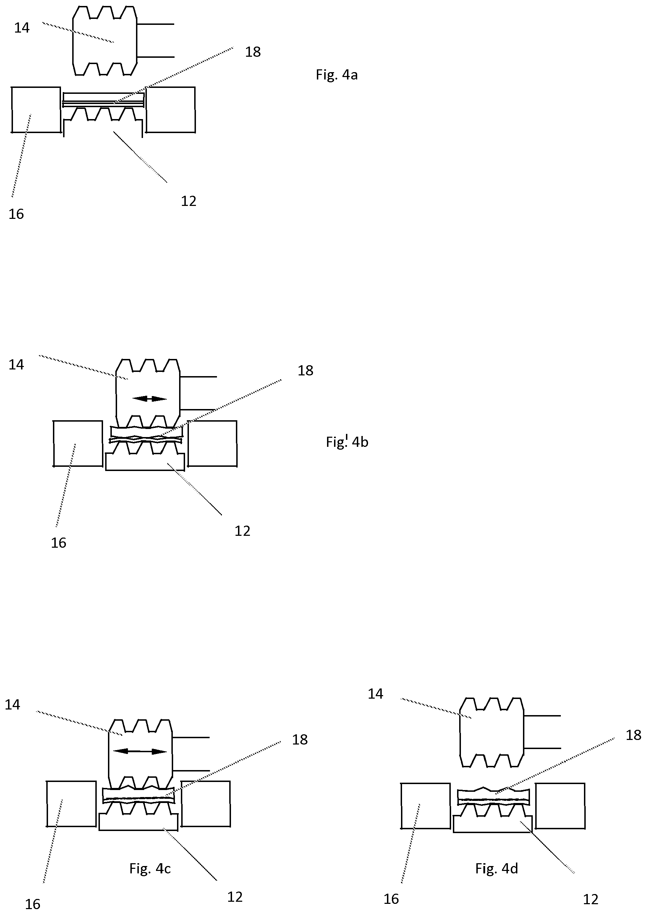

Figures 4a to 4e depict an apparatus that may be used for forming an ultrasonic weld. The apparatus comprises a first clamping portion 12 and a second clamping portion 14 that are movable from a first spaced apart position to a second position where the portions 12, 14 are closer to one another. The apparatus also includes a positioning jig 16 for supporting the parts 18 to be welded in position. The second clamping portion 14 is configured to vibrate at ultrasonic frequencies.

As best seen in Figure 4a, the parts 18 to be welded are placed on top of the first clamping portion 12 while the clamping portions are in their first spaced apart position. The second clamping portion 14 is then moved relatively towards the first clamping portion 12 to apply a clamping pressure between the parts 18 to be welded. The second clamping portion 14 is then vibrated at ultrasonic frequency (Figure 4b). This pre-shapes and rubs the parts 18 together, so that their surfaces are prepared for weld formation. In the main welding phase, the parts 18 are joined together (see Figure 4c). The first and second clamping portions 12, 14 are then moved apart to allow the welded parts 18 to be removed from the apparatus (see Figure 4d).

### EXAMPLE 1

A linear nickel contact lead, composed of 50µm thick nickel ribbon, was used. The endmost 5mm of the contact lead was expanded to form a mesh. A battery with 60 lithium anodes, each of 78µm thickness, was assembled. A stack of lithium contact tabs protruded from the battery. The lithium contact tabs were formed and trimmed to produce a flat welding area and to ensure that each of the tabs, regardless of its position, in the stack used the minimum quantity of lithium. The formed stack of lithium tabs was then positioned between the welding fixtures of an ultrasonic welder. The contact lead was then positioned on top of the stack of lithium tabs, such that the meshed region overlapped with the flat lithium welding zone. The welding conditions listed in **Table 1** were then entered into an AmTech 900B 40kHz ultrasonic welder. A single weld was then performed. Each of the 60 lithium layers were welded firmly to each other. A strong join was produced between the lithium and the contact lead. This join had been created by the softened lithium penetrating through the mesh of the contact lead.

**Table 1 - The welder setting used in Example 1.**

| **Energy / J** | **Amplitude / µm** | **Trigger Pressure / Psi** | **Pressure / Psi** |
|---|---|---|---|
| 180 | 5 | 20 | 20 |

### EXAMPLE 2

A "T" shaped contact lead was made by welding a piece of nickel ribbon (50µm thick) to a piece of copper mesh. The mesh opening was approximately 200x700µm, with a bar width of 100µm. The mesh was thrice as long as the nickel ribbon was wide. The mesh was 5mm wide; the same as the welding zone. The mesh was positioned centrally to form the cross of the "T" and welded into position by an ultrasonic welder using the conditions given in **Table 2, weld A.** The contact lead was positioned between the welding fixtures of an ultrasonic welder such that the meshed region fell into the welding zone.

A battery with 20 lithium anodes, each of 78µm thickness, was assembled. A stack of lithium contact tabs protruded from the battery. The stack of lithium contact tabs was formed and trimmed to produce a flat welding area and to ensure that each of the contact tabs, regardless of its position, in the stack used the minimum quantity of lithium.

The stack of lithium contact tabs was then positioned on top of the contact lead, between the welding fixtures of an ultrasonic welder. The copper mesh "arms" of the "T" shaped contact lead were then folded around the stack of lithium contact tabs. The welding conditions listed in **Table 2, weld B** were then entered into an AmTech 900B 40kHz ultrasonic welder. A single weld was then performed. Each of the 20 lithium layers were welded firmly to each other. A strong join was produced between the lithium and the contact lead. This join had been created by the softened lithium penetrating through the mesh of the contact lead.

**Table 2 - The welder settings used in Example 2**

| **Weld** | **Energy / J** | **Amplitude / µm** | **Trigger Pressure / Psi** | **Pressure / Psi** |
|---|---|---|---|---|
| **A** | 70 | 80 | 80 | 5 |
| **B** | 10 | 5 | 20 | 20 |

### EXAMPLE 3

An "L" shaped contact lead was manufactured by photochemical etching from a sheet of 100µm thick stainless steel. The upright section of the "L" is continuous steel foil. The base of the "L" was etched with a mesh pattern. The mesh opening was 500x500µm and the bar width was 100µm. The base of the "L" was twice the width of the upright section. The width of the base section was 5mm, the same as the weld zone.

A battery with 20 lithium anodes, each of 78µm thickness, was assembled. A stack of lithium contact tabs protruded from the battery. The contact lead was positioned between the top face to the lowermost lithium contact tab and the bottom face of the remainder of the stack. The remainder of the stack of lithium contact tabs was pushed down onto the meshed region of the contact lead. The protruding meshed section of the contact lead was folded over the stack of contact tabs. The contact assembly was positioned between the welding fixtures of an ultrasonic welder such that the meshed regions fell into the welding zone.

The welding conditions listed in **Table 3** were then entered into an AmTech 900B 40kHz ultrasonic welder. A single weld was then performed. Each of the 20 lithium layers were welded firmly to each other. A strong join was produced between the lithium and the contact lead. This join had been created by the softened lithium penetrating through the mesh of the contact lead.

**Table 3 - The welder settings used in Example 3**

| **Energy / J** | **Amplitude / µm** | **Trigger Pressure / Psi** | **Pressure / Psi** |
|---|---|---|---|
| 40 | 5 | 20 | 20 |

### EXAMPLE 4 (Nickel)

A square shaped contact lead was made by cutting a piece of plane nickel foil (100µm thick). The contact lead was positioned between the welding fixtures of an ultrasonic welder such that the welding zone was 1mm from the tab edge. The welding zone was a rectangle (20 x 6mm).

A battery with 9 lithium anodes, each of 100µm thickness, was assembled. A stack of lithium contact tabs protruded from the battery. The stack of lithium contact tabs was formed and trimmed to produce a flat welding area and to ensure that each of the contact tabs, regardless of its position, in the stack used the minimum quantity of lithium. The trimmed edges of lithium tabs fully covered the welding zone at the nickel foil.

The stack of lithium contact tabs was then positioned on top of the contact lead, between the welding fixtures of an ultrasonic welder. The welding conditions are listed in **Table 4.** The welder is a NewPower Ultrasonic Electronic Equipment CO., LTD 40kHz ultrasonic welder.A single weld was performed. Each of the 9 lithium layers were welded firmly to each other. A strong join was produced between the lithium and the nickel contact lead. This join had been tested per peel test procedure.

**Table 4**

| | |
|---|---|
| Frequency | 40kHz |

| Welding Time sectors: | |
|---|---|
| Delay | 0.15 s |
| Welding | 0.18 s |
| Take off | 0.20 s |
| Amplitude | 50% (of 10µm) |
| Pressure | 0.21 MPa |
| Power | 350 W |
| Energy | 350 J |

### EXAMPLE 5 (Copper)

A square shaped contact lead was made by cutting a piece of plane copper foil (100µm thick). The contact lead was positioned between the welding fixtures of an ultrasonic welder such that the welding zone was placed 1mm from the tab edge. The welding zone was a rectangle (20 x 6mm).

A battery with 9 lithium anodes, each of 100µm thickness, was assembled. A stack of lithium contact tabs protruded from the battery. The stack of lithium contact tabs was formed and trimmed to produce a flat welding area and to ensure that each of the contact tabs, regardless of its position, in the stack used the minimum quantity of lithium. The trimmed edges of lithium tabs fully covered the welding zone at the copper foil.

The stack of lithium contact tabs was then positioned on top of the contact lead, between the welding fixtures of an ultrasonic welder. The welding conditions are listed in **Table 5.** The welder is a NewPower Ultrasonic Electronic Equipment CO., LTD 40kHz ultrasonic welder. A single weld was then performed. Each of the 9 lithium layers were welded firmly to each other. A strong join was produced between the lithium and the copper contact lead. This join had been tested per peel test procedure.

**Table 5**

| | |
|---|---|
| Frequency | 40kHz |

| Welding Time sectors: | |
|---|---|
| Delay | 0.15 s |
| Welding | 0.16 s |
| Take off | 0.20 s |
| Amplitude | 50% (of 10µm) |
| Pressure | 0.20 MPa |
| Power | 300 W |
| Energy | 300 J |

### EXAMPLE 6 (Stainless Steel, 316)

A square shaped contact lead was made by cutting a piece of plane stainless steel foil (58µm thick). The contact lead was positioned between the welding fixtures of an ultrasonic welder such that the welding zone was placed 1mm from the tab edge. The welding zone was a rectangle (20 x 6mm).

A battery with 9 lithium anodes, each of 100µm thickness, was assembled. A stack of lithium contact tabs protruded from the battery. The stack of lithium contact tabs was formed and trimmed to produce a flat welding area and to ensure that each of the contact tabs, regardless of its position, in the stack used the minimum quantity of lithium. The trimmed edges of lithium tabs fully covered the welding zone at the stainless steel foil.

The stack of lithium contact tabs was then positioned on top of the contact lead, between the welding fixtures of an ultrasonic welder. The welding conditions are listed in **Table 6,** were then entered into the NewPower Ultrasonic Electronic Equipment CO., LTD 40kHz ultrasonic welder. A single weld was then performed. Each of the 9 lithium layers were welded firmly to each other. A strong join was produced between the lithium and the stainless steel contact lead. This join had been tested per peel test procedure.

**Table 6**

| | |
|---|---|
| Frequency | 40kHz |

| Welding Time sectors: | |
|---|---|
| Delay | 0.15 s |
| Welding | 0.18 s |
| Take off | 0.20 s |
| Amplitude | 80% (of 10µm) |
| Pressure | 0.21 MPa |
| Power | 350 W |
| Energy | 350 J |

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method of connecting a stack of electrodes to a contact lead, wherein each electrode comprises a lithium or lithium alloy sheet formed with a tab providing a contact zone protruding from each sheet in substantially the same location, so that the tabs of the stack of electrodes are substantially aligned when the electrodes are aligned with each other and arranged as an electrode stack, and wherein the contact lead comprises an electrically conductive lead with an end portion, the method comprising the steps of:
i) positioning the end portion of the contact lead a) on top of the tabs of the electrode stack b) underneath the tabs of the electrode stack, or c) at an intermediate position between the top and the bottom of the electrode stack, and
ii) ultrasonically welding the contact zone to the end portion so as to join an electrode to the contact lead and to form a lithium to lithium or lithium alloy to lithium alloy weld between at least two tabs of the electrode stack.

2. A method as claimed in claim 1, wherein the end portion of the contact lead is formed from a metal or metal alloy comprising at least one of nickel, copper and stainless steel.

3. A method as claimed in claim 1 or 2, wherein the ultrasonic welding step is carried out at a frequency of 30 to 50 kHz.

4. A method as claimed in any one of the preceding claims, wherein the end portion is formed from a sheet of material that includes a plurality of through holes or is devoid of through holes.

5. A method as claimed in claim 4, wherein end portion is formed from a planar sheet of material that includes a plurality of through holes, whereby metal of the contact zone penetrates through the through holes of the end portion so as to join the at least one electrode to the contact lead during and/or as a result of the ultrasonic welding step.

6. A method as claimed in claim 4, wherein the end portion is devoid of through holes.

7. A method according to any preceding claim, wherein the end portion of the contact lead is an integral part of the contact lead, or wherein the end portion of the contact lead is a separate metal component that is joined to the contact lead.

8. A lithium sulphur battery comprising a stack of electrodes to a contact lead, wherein each electrode comprises a lithium or lithium alloy sheet formed with a tab providing a contact zone protruding from each sheet in substantially the same location, so that the tabs of the stack of electrodes are substantially aligned, and wherein the contact lead comprises an electrically conductive lead with an end portion, whereby:
i) the end portion of the contact lead is positioned a) on top of the tabs of the electrode stack, b) underneath the tabs of the electrode stack, or c) at an intermediate position between the top and the bottom of the electrode stack, and
ii) an electrode is ultrasonically welded and joined directly to the contact lead, and at least two tabs of the electrode stack are ultrasonically welded and joined directly together by a lithium to lithium or lithium alloy to lithium alloy weld.

## Patentansprüche

1. Verfahren zur Verbindung eines Elektrodenstapels mit einer Kontaktzuleitung, wobei jede Elektrode eine Lithium- oder Lithiumlegierungslage umfasst, die mit einem Ansatz ausgebildet ist, der eine Kontaktzone bereitstellt, die von jeder Lage im Wesentlichen an der gleichen Position vorsteht, so dass die Ansätze des Elektrodenstapels im Wesentlichen ausgerichtet sind, wenn die Elektroden miteinander ausgerichtet sind und als ein Elektrodenstapel angeordnet sind, und wobei die Kontaktzuleitung eine elektrisch leitfähige Zuleitung mit einem Endabschnitt umfasst, wobei das Verfahren die folgenden Schritte umfasst:
i) Positionieren des Endabschnitts der Kontaktzuleitung a) über den Ansätzen des Elektrodenstapels, b) unter den Ansätzen des Elektrodenstapels, oder c) an einer intermediären Position zwischen der Oberseite und der Unterseite des Elektrodenstapels; und
ii) Ultraschallschweißen der Kontaktzone an den Endabschnitt, um eine Elektrode mit der Kontaktzuleitung zu verbinden und um ein Lithium-Lithium- oder Lithiumlegierung-Lithiumlegierung-Schweißverbindung zwischen wenigstens zwei Ansätzen des Elektrodenstapels zu bilden.

2. Verfahren nach Anspruch 1, wobei der Endabschnitt der Kontaktzuleitung aus einem Metall oder einer Metalllegierung besteht, wenigstens einen der Stoffe Nickel, Kupfer und Edelstahl umfassend.

3. Verfahren nach Anspruch 1 oder 2, wobei der Schritt des Ultraschallschweißens mit einer Frequenz von 30 bis 50 kHz ausgeführt wird.

4. Verfahren nach einem der vorstehenden Ansprüche, wobei der Endabschnitt aus einer Materiallage besteht, die eine Mehrzahl von Durchgangslöchern aufweist oder keine Durchgangslöcher aufweist.

5. Verfahren nach Anspruch 4, wobei der Endabschnitt aus einer planaren Materiallage besteht, die eine Mehrzahl von Durchgangslöchern aufweist, wodurch Metall der Kontaktzone durch die Durchgangslöcher des Endabschnitts dringt, um die wenigstens eine Elektrode während und/oder als Folge des Schritts des Ultraschallschweißens mit der Kontaktzuleitung zu verbinden.

6. Verfahren nach Anspruch 4, wobei der Endabschnitt keine Durchgangslöcher aufweist.

7. Verfahren nach einem der vorstehenden Ansprüche, wobei der Endabschnitt der Kontaktzuleitung ein integraler Bestandteil der Kontaktzuleitung ist, oder wobei der Endabschnitt der Kontaktzuleitung eine separate Metallkomponente ist, die mit der Kontaktzuleitung verbunden ist.

8. Lithium-Schwefel-Akkumulator, der einen Elektrodenstapel zu einer Kontaktzuleitung umfasst, wobei jede Elektrode eine Lithium- oder Lithiumlegierungslage umfasst, die mit einem Ansatz ausgebildet ist, der eine Kontaktzone bereitstellt, die von jeder Lage im Wesentlichen an der gleichen Position vorsteht, so dass die Ansätze des Elektrodenstapels im Wesentlichen ausgerichtet sind, wenn die Elektroden miteinander ausgerichtet sind und als ein Elektrodenstapel angeordnet sind, und wobei die Kontaktzuleitung eine elektrisch leitfähige Zuleitung mit einem Endabschnitt umfasst, wobei:
i) der Endabschnitt der Kontaktzuleitung a) über den Ansätzen des Elektrodenstapels, b) unter den Ansätzen des Elektrodenstapels, oder c) an einer intermediären Position zwischen der Oberseite und der Unterseite des Elektrodenstapels positioniert ist; und
ii) eine Elektrode ultraschallgeschweißt und direkt mit der Kontaktzuleitung verbunden wird, und wobei wenigstens zwei Ansätze des Elektrodenstapels durch eine Lithium-Lithium- oder Lithiumlegierung-Lithiumlegierung-Schweißverbindung ultraschallgeschweißt und direkt miteinander verbunden werden.

## Revendications

1. Procédé de connexion d'une pile d'électrodes à un fil de contact, chaque électrode comprenant une feuille en lithium ou en alliage de lithium formée avec une languette offrant une zone de contact faisant saillie de chaque feuille sensiblement au même endroit, de sorte que les languettes de la pile d'électrodes soient sensiblement alignées lorsque les électrodes sont alignées les unes avec les autres et disposées comme une pile d'électrodes, et le fil de contact comprenant un fil électroconducteur ayant une partie d'extrémité, le procédé comprenant les étapes consistant à :
i) positionner la partie d'extrémité du fil de contact a) sur les languettes de la pile d'électrodes b) sous les languettes de la pile d'électrodes, ou c) à une position intermédiaire entre le haut et le bas de la pile d'électrodes, et
ii) souder par ultrasons la zone de contact à la partie d'extrémité de sorte à joindre une électrode au fil de contact et à former une soudure lithium sur lithium ou alliage de lithium sur alliage de lithium entre au moins deux languettes de la pile d'électrodes.

2. Procédé selon la revendication 1, la partie d'extrémité du fil de contact étant formée en un métal ou alliage métallique comprenant du nickel, du cuivre et/ou de l'acier inoxydable.

3. Procédé selon la revendication 1 ou 2, l'étape de soudage par ultrasons étant effectuée à une fréquence comprise entre 30 et 50 kHz.

4. Procédé selon l'une quelconque des revendications précédentes, la partie d'extrémité étant formée à partir d'une feuille de matériau qui comprend une pluralité de trous traversants ou est dépourvue de trous traversants.

5. Procédé selon la revendication 4, la partie d'extrémité étant formé à partir d'une feuille plane de matériau qui comprend une pluralité de trous traversants, moyennant quoi le métal de la zone de contact pénètre à travers les trous traversants de la partie d'extrémité de sorte à joindre l'au moins une électrode au fil de contact pendant et/ou à la suite de l'étape de soudure par ultrasons.

6. Procédé selon la revendication 4, la partie d'extrémité étant dépourvue de trous traversants.

7. Procédé selon l'une quelconque des revendications précédentes, la partie d'extrémité du fil de contact faisant partie intégrante du fil de contact, ou la partie d'extrémité du fil de contact étant un composant métallique séparé qui est joint au fil de contact.

8. Batterie au soufre-lithium comprenant une pile d'électrodes connectée à un fil de contact, chaque électrode comprenant une feuille en lithium ou en alliage de lithium formée avec une languette offrant une zone de contact faisant saillie de chaque feuille sensiblement au même endroit, de sorte que les languettes de la pile d'électrodes soient sensiblement alignées, et le fil de contact comprenant un fil électroconducteur ayant une partie d'extrémité, moyennant quoi :
i) la partie d'extrémité du fil de contact est positionnée a) sur les languettes de la pile d'électrodes b) sous les languettes de la pile d'électrodes, ou c) à une position intermédiaire entre le haut et le bas de la pile d'électrodes, et
ii) une électrode est soudée par ultrasons et jointe directement au fil de contact, et au moins deux languettes de la pile d'électrodes sont soudées par ultrasons et jointes directement ensemble par une soudure lithium sur lithium ou alliage de lithium sur alliage de lithium.
